# EUROPÄISCHE PATENTSCHRIFT

(11) **EP 2 101 385 B1**
(45) Veröffentlichungstag und Bekanntmachung des Hinweises auf die Patenterteilung: **18.10.2017**
(21) Anmeldenummer: 08021348.1
(22) Anmeldetag: 09.12.2008
(51) Int. Cl.: H02G 3/22, H02G 3/18

(54) **Anschlussbodendose**
Connection floor socket
Boîte de connexion au sol

(30) Priorität: 10.03.2008 DE 202008003432 U
(43) Veröffentlichungstag der Anmeldung: 16.09.2009
(73) Patentinhaber: PUK-Werke KG Kunststoff-Stahlverarbeitung GmbH & Co., 12057 Berlin (DE)
(72) Erfinder: Hoffmann, Erwin, D-54612 Nimshuscheid (DE); Jeschke, Frank, D-12623 Berlin (DE)
(74) Vertreter: Jungblut & Seuss

(56) Entgegenhaltungen:
- DE-U1- 9 402 761
- DE-U1- 20 209 189
- US-A1- 2002 134 568

## Beschreibung

### Gebiet der Erfindung.

Die Erfindung betrifft eine Anschlussbodendose mit einem Dosenkörper, welcher eine oberseitige Dosenkörperöffnung aufweist, und mit einem die Dosenkörperöffnung verschließenden Dosendeckel, wobei der Dosendeckel eine zu einem Rand des Dosendeckels offene Kabeldurchführungsöffnung aufweist, wobei der Dosendeckel einen nach oben weisenden und um die Ränder des Dosendeckels sowie der Kabeldurchführungsöffnung umlaufenden Deckelsteg aufweist, wobei in dem Deckelsteg in Bereich der Kabeldurchführungsöffnung eine Abdeckklappe eingerichtet ist, welche zwischen einer Geschlossenstellung und einer Offenstellung um eine innenseitig der Kabeldurchführungsöffnung liegende, parallel zur Außenkante des Dosendeckels verlaufende und in seitlichen Teilbereichen des Deckelsteges, bezogen auf die Kabeldurchführungsöffnung, gelagerte Schwenkachse verschwenkbar ist, wobei die Oberseite der Abdeckklappe mit einer oberen Kante des Deckelsteges abschließt, wobei die Abdeckklappe zumindest an den Seiten, nicht jedoch an der äußeren Kante, einen nach unten weisenden Klappensteg aufweist, wobei die Abdeckklappe auf der Schwenkachse zusätzlich nach außen verschieblich gelagert ist, und wobei die äußeren Enden des Klappenstegs jeweils eine Rastausnehmung aufweisen, welche auf einem Deckelrahmen des Dosenkörpers bei geöffneter und nach außen verschobener Abdeckklappe aufrasten.

Hintergrund der Erfindung und Stand der Technik.

Anschlussbodendosen sind beispielsweise in verschiedenen Varianten aus den Literaturstellen DE 7511354 U, DE 2037268 C3, WO 98/34310 A1, DE 10 2005 006 144 A1, DE-OS 25 28 951 und DE 203 14 597 U1 bekannt.

Aus der Praxis ist aus einem völlig anderen technologischen Bereich, nämlich der Kraftfahrzeugtürverschlüsse, ein Handgriff bekannt, dessen Außenfläche mit der Türaußenhaut im Wesentlichen fluchtet und um eine von einem ersten Ende des Handgriffs beabstandete und parallel zur Türaußenhaut verlaufende Schwenkachse gelagert ist. Wenn auf das erste Ende des Handgriffs gedrückt wird, tritt das zweite Ende des Handgriffs über die Türaußenhaut hervor und kann dann gezogen werden, wodurch letztendlich der Kraftfahrzeugtürverschluss betätigt wird. Beispielhaft wird dazu auf das Fahrzeug Mercedes 300 SL aus der Zeit um 1960 verwiesen.

Aus der Praxis ist eine Anschlussbodendose des eingangs genannten Aufbaus bekannt. Bei dieser Anschlussbodendose stellt sich das Problem, dass zu Wartungs- oder Montage- bzw. Demontagezwecken der Dosendeckel aus dem Deckelrahmen herausgehoben werden muss, damit eine Bedienperson Zugang zum Inneren der Anschlussbodendose erhält. Dies ist insbesondere im Falle einer geschlossenen Abdeckklappe schwierig, weil keinerlei sicherer Angriffspunkt vorliegt, weil der Dosendeckel insgesamt geschlossen und in den Deckelrahmen eingelassen ist. Dieses Problem ist beim insofern aus der Praxis bekannten Dosendeckel dadurch gelöst, dass ein Teil des Deckelsteges nach innen versetzt und in dem so entstehenden Raum zwischen Deckelsteg und Deckelrahmen ein Handgriff angeordnet ist. Dieser Handgriff ist um eine horizontale Griffschwenkachse schwenkbar, wobei die Griffschwenkachse von einem ersten Ende des Handgriffs beabstandet ist. Am zweiten Ende kann eine Bedienperson den Handgriff betätigen, wobei sich das erste Ende gegen den Deckelrahmen abstützt und den Dosendeckel aus dem Deckelrahmen heraushebt. Problematisch bei dieser Ausführungsform ist, dass in der Normalstellung des Handgriffs dessen Oberkante mit der Oberkante des Deckelstegs bzw. des Deckelrahmens abschließt. Eine Bedienperson muss zunächst im Bereich des ersten Endes mit einem Finger einer ersten Hand versuchen, den Handgriff etwas herunter zu drücken und dann mit der zweiten Hand das heraustretende zweite Ende des Handgriffs greifen. Dies ist umständlich und zudem in der Herstellung aufwändig.

Technisches Problem der Erfindung.

Der Erfindung liegt daher das technische Problem zu Grunde, eine Anschlussbodendose anzugeben, deren Dosendeckel einfacher zu bedienen und zugleich weniger aufwändig in der Herstellung ist.

Grundzüge der Erfindung und bevorzugte Ausführungsformen.

Zur Lösung dieses technischen Problems lehrt die Erfindung, dass zwischen dem innenseitig der Kabeldurchführungsöffnung verlaufenden Deckelsteg und dem innenseitigen Rand der Abdeckklappe ein Handgriff angeordnet ist, wobei der Handgriff im Bereich eines ersten Endes des Handgriffs, jedoch von dem ersten Ende des Handgriffs beabstandet, eine orthogonal zum benachbarten Deckelsteg verlaufende und den Deckelsteg sowie den Handgriff durchgreifende Griffschwenkachse aufweist, wobei die Oberseite des Handgriffs mit der oberen Kante des Deckelsteges sowie der Oberseite der Abdeckklappe im Wesentlichen abschließt, wobei entweder der Handgriff im Bereich zwischen der Griffschwenkachse und dem ersten Ende des Handgriffs einen über die Abdeckklappe und den Deckelsteg herausragenden Betätigungsvorsprung aufweist, oder der Deckelsteg und/oder die Abdeckklappe neben dem Bereich zwischen der Griffschwenkachse und dem ersten Ende des Handgriffs eine nach oben offene Betätigungsausnehmung aufweist.
Mit der Erfindung wird erreicht, dass der Handgriff einfach und nur mit einer Hand bedient werden kann. Während mit einem Finger einer Hand auf den Handgriff im Bereich des Betätigungsvorsprungs bzw. der Betätigungsausnehmung gedrückt wird, kann mit dem Daumen derselben Hand das zweite Ende gefasst und daran der Dosendeckel aus dem Deckelrahmen gehoben werden. Zudem ist die Herstellung einfach, weil kein komplexer Verlauf des Deckelsteges und/oder eines Deckelboden eingerichtet werden muss, um ein Abstützen des Handgriffs gegen den Deckelrahmen zu ermöglichen. Eine Abstützung ist vielmehr gar nicht erforderlich, was zudem mit geringeren Betätigungskräften einhergeht.
Als weitere Vorteile sind anzumerken, dass beim Anordnung der Abdeckplatte und somit des Handgriffs etwa in der Mitte einer Kante eines rechteckigen oder quadratischen Dosendeckels bzw. bei einem runden Dosendeckel die durch Betätigung des Handgriffs eingeleitete Hubkraft in etwa durch den Schwerpunkt des Dosendeckels verläuft bzw. im Wesentlichen parallel zu einer zum Dosendeckel orthogonalen und durch den Schwerpunkt des Dosendeckels verlaufenden Achse liegt, wodurch beim Anheben des Dosendeckels dieser nicht seitlich verkippt und womöglich im Deckelrahmen verkantet. Die Bedienung ist also vereinfacht und sicherer. Zudem liegen keine störenden Bauteile im Bereich der Kabeldurchführungsöffnung insbesondere in der Offenstellung der Abdeckklappe mit hindurchgeführten Kabeln, welche Kabel beschädigen könnten, gegenüber Ausführungsformen des Standes der Technik, wo in der Abdeckklappe ein versenkbarer Hubgriff angeordnet ist.

Im Einzelnen bestehen verschiedene Möglichkeiten der Weiterbildung der Erfindung.

In der Regel, aber nicht zwingend, wird der Dosendeckel in Aufsicht eine im Wesentlichen quadratische oder rechteckige Form aufweisen. Es ist aber auch möglich ein runde Form vorzusehen, wobei dann der Deckelsteg innenseitig der der Kabeldurchführungsöffnung gerade verlaufen wird. Typischerweise ist der Dosenkörper im Wesentlichen kastenförmig und unten sowie an den Seiten geschlossen.

Vorteilhafterweise weist der Handgriff im Bereich eines zweiten Endes eine nach unten offene Betätigungsausnehmung auf. Dadurch wird erreicht, dass bereits ein sehr flacher Betätigungsvorsprung bzw. eine sehr flache Betätigungsausnehmung ausreichen, um das zweite Ende des Handgriffs zu fassen. Unabhängig hiervon wird sich die Höhe des Betätigungsvorsprungs bzw. die Tiefe der Betätigungsausnehmung im Bereich von 0,1 bis 5 mm, vorzugsweise im Bereich von 0,5 bis 2 mm, bewegen. Der Abstand des Betätigungsvorsprungs bzw. der Betätigungsausnehmung von der Griffschwenkachse (bezogen auf einen Mittelpunkt in Aufsicht) liegt dabei vorteilhafterweise im Bereich von 1 bis 50 mm, vorzugsweise 5 bis 20 mm. Der Abstand der Griffschwenkachse vom ersten Ende des Handgriffs beträgt vorzugsweise 5 bis 50 mm, insbesondere 15 bis 40 mm. Die Gesamtlänge des Handgriffs liegt zweckmäßigerweise, um eine Einhandbedienung zu ermöglichen, im Bereich von 50 bis 250 mm, insbesondere von 100 bis 200 mm.

Vorteilhaft ist es, wenn bei nach innen verschobenem und in der Geschlossenstellung befindlicher Abdeckklappe die Oberseite des Handgriffs, ggf. mit Ausnahme des Betätigungsvorsprungs, die Abdeckklappe und der Deckelsteg, ggf. mit Ausnahme der Betätigungsausnehmung, eine ebene und im Wesentlichen geschlossene Fläche bilden. Dadurch wird sichergestellt, dass eine über die Anschlussbodendose schreitende Person nicht stolpern kann. Auch insofern ist es im Rahmen der Erfindung vorteilhaft, dass der Betätigungsvorsprung bzw. die Betätigungsausnehmung sehr flach ausfallen können. Zur Vermeidung von Stolperfallen wird es auch in der Regel zweckmäßig sein, wenn die Oberkante des Deckelrahmens mit der Oberkante des Deckelstegs abschließt.

Grundsätzlich kann die Verbindung zwischen Handgriff, Griffschwenkachse und Deckelsteg beliebig sein. Vorteilhafterweise handelt es sich um eine fliegende Lagerung. Die Griffschwenkachse kann drehfest oder verdrehbar sein. Für die Praxis ist es wegen der einfachen Herstellung bevorzugt, wenn die Griffschwenkachse durch ein Achsenelement, vorzugsweise eine Schraube, gebildet ist, welche den Deckelsteg frei drehbar durchgreift und in dem Handgriff drehfest gelagert ist.

Der Deckelrahmen und der Dosenkörper können als voneinander trennbare Bauelemente ausgebildet sein, beispielsweise dadurch, dass der Deckelrahmen in eine Deckelrahmenausnehmung des Dosenkörpers einsetzbar ist. Grundsätzlich kommen für eine erfindungsgemäße Anschlussbodendose und deren Bauteile alle fachüblichen Materialien in Frage. Bevorzugt ist es, wenn zumindest der Deckelrahmen und der Dosendeckel, mit allen dessen Bauteilen, aus rostfreiem Edelstahl gebildet ist. Zweckmäßigerweise erstreckt sich der Deckelboden zumindest teilweise in die Kabeldurchführungsöffnung hinein, und zwar so weit, dass er die Klappenstege in der Geschlossenstellung der Abdeckklappe sowie den Handgriff in der Ruhestellung stützt. Ersteres wird erreicht, indem sich der Deckelboden bis unter zumindest einem Teilbereich der Klappenstege, vorzugsweise bis unter die gesamten Klappenstege, erstreckt. Dadurch wird auch eine besonders hohe Belastbarkeit der Abdeckklappe in der Geschlossenstellung erzielt. Letzteres wird erreicht, indem sich der Deckelboden in der Kabeldurchführungsöffnung bis unter zumindest einen Teilbereich des zweiten Endes, vorzugsweise bis unter das zweite Ende des Handgriffs insgesamt, erstreckt. In diesem Zusammenhang ist es weiterhin vorteilhaft, wenn sich der Deckelboden bis unter den Handgriff über dessen gesamte Länge erstreckt, wobei der Handgriff an seiner unteren Seite des ersten Endes eine Abschrägung aufweist, welche den Drehwinkel des Handgriffs aus einer Ruhestellung in einen Betätigungsstellung begrenzt. Dadurch wird die Hubkraft in den Deckelboden eingeleitet und ein Überdrehen des Handgriffs ist verhindert. Der Drehwinkel des Handgriffs aus der Ruhestellung in die Betätigungsstellung kann durch entsprechende Ausbildung der Länge des ersten Endes des Handgriffs (gemessen ab der Griffschwenkachse) in Verbindung mit dessen Höhe und der Ausbildung der Abschrägung zwischen 10° und 80°, vorzugsweise zwischen 20° und 45°, eingerichtet sein. Dadurch wird auch gewährleistet, dass der Handgriff nach dem Loslassen stets in seine Ruhestellung zurückfällt und nicht nach oben hervorragend stehen bleiben kann, was eine Stolperfalle bilden könnte.

Im Folgenden wird die Erfindung anhand von lediglich ein Ausführungsbeispiel darstellenden Figuren erläutert. Es zeigen:
- Fig. 1:: eine seitliche Ansicht eines erfindungsgemäßen Dosendeckels mit Handgriff in Ruhestellung,
- Fig. 2:: den Gegenstand der Figur 1 mit Handgriff in etwa auf halbem Wege in die Betätigungsstellung,
- Fig. 3:: einen Querschnittsprojektion in der Ebene des Klappenstegs, welcher sich im Bereich des zweiten Endes des Handgriffs befindet, mit Abdeckklappe in Geschlossenstellung und Handgriff in Ruhestellung,
- Fig. 4:: den Gegenstand der Figur 3 mit Handgriff in Betätigungsstellung und
- Fig. 5:: den Gegenstand der Figur 3 mit Abdeckklappe in Offenstellung.

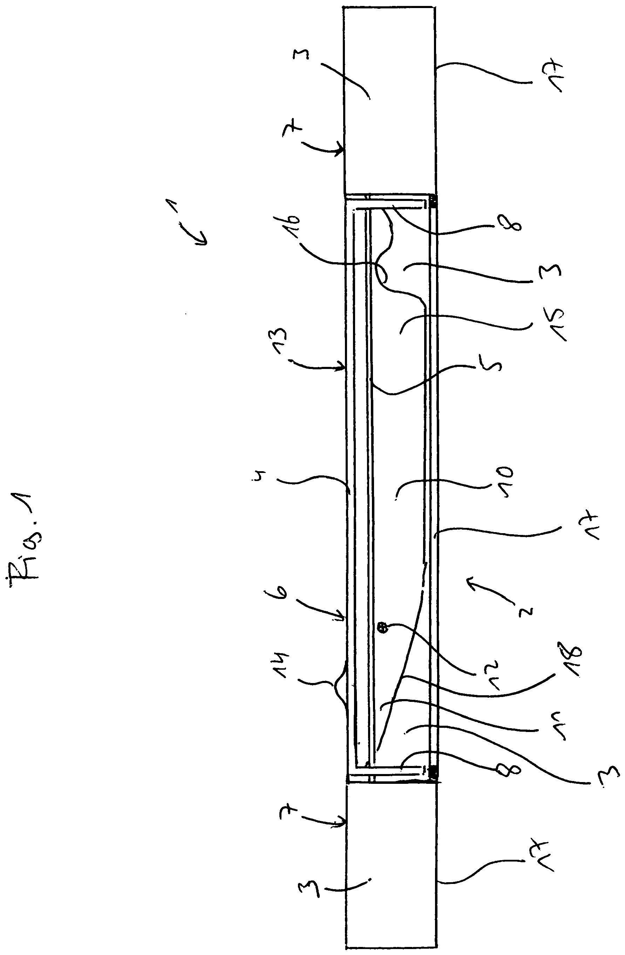

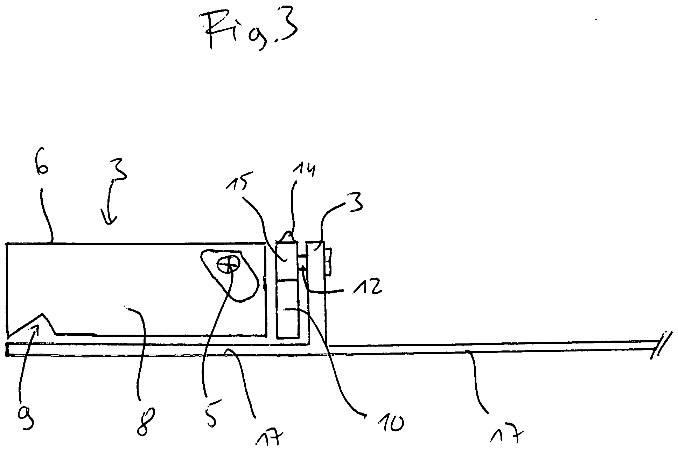

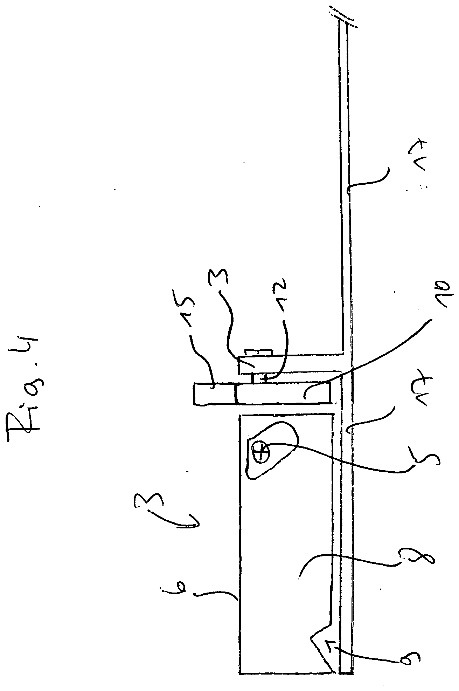

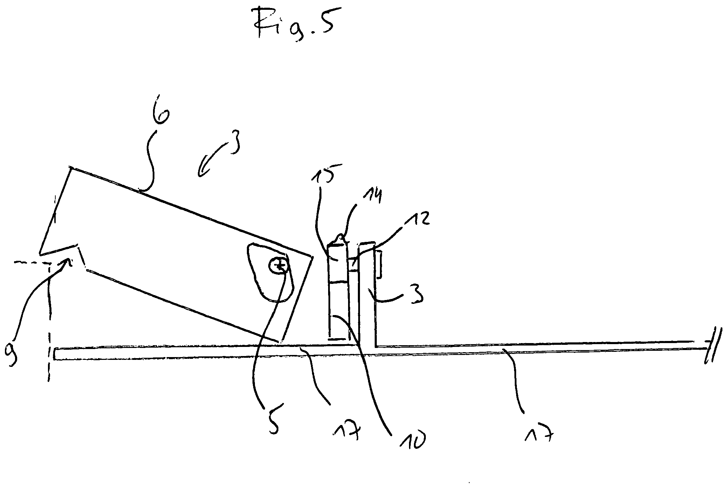

Anschlusbodendosen und zugehörige Dosendeckel sind grundsätzlich dem Fachmann gut vertraut und brauchen daher nicht dargestellt zu werden. Daher werden folgend nur Detailansichten und Funktionsansichten eines erfindungsgemäß eingesetzten Dosendeckel gezeigt und erläutert.
Aus einer vergleichenden Betrachtung der Figuren 1 bis 5 erkennt man, dass der Dosendeckel 1 eine zu einem Rand des Dosendeckels 1 offene Kabeldurchführungsöffnung 2 aufweist. Dabei ist der Dosendeckel 1 durch einen Deckelboden 17 und einen nach oben weisenden und um die Ränder des Dosenbodens 17 sowie der Kabeldurchführungsöffnung 2 umlaufenden Deckelsteg 3 gebildet. In dem Bereich der Kabeldurchführungsöffnung 2 und diese im Wesentlichen verschließend ist im Bereich der Kabeldurchführungsöffnung 2 eine Abdeckklappe 4 eingerichtet, welche zwischen einer Geschlossenstellung und einer Offenstellung um eine innenseitig der Kabeldurchführungsöffnung 2 liegende, parallel zur Außenkante des Dosendeckels 1 verlaufende und in seitlichen Teilbereichen des Deckelsteges 3, bezogen auf die Kabeldurchführungsöffnung 2, gelagerte Schwenkachse 5 verschwenkbar ist. Die Oberseite 6 der Abdeckklappe 4 schließt in der Geschlossenstellung (Figuren 1 bis 4) mit einer oberen Kante 7 des Deckelsteges 3 ab.
Insbesondere aus den Figuren 3 bis 5 erkennt man, dass die Abdeckklappe 4 an den Seiten, nicht jedoch an der äußeren Kante, einen nach unten weisenden Klappensteg 8 aufweist. Die Abdeckklappe 4 ist auf der Schwenkachse 5 zusätzlich nach außen verschieblich gelagert, und die äußeren Enden des Klappenstegs 8 weisen jeweils eine Rastausnehmung 9 auf, welche auf einem Deckelrahmen des Dosenkörpers bei geöffneter und nach außen verschobener Abdeckklappe 4 aufrasten. Dies erkennt man besonders gut anhand der Figur 5 und der darin gestrichelten Linie, welche die Innenseite eines Deckelrahmens darstellen soll.
Zwischen dem innenseitig der Kabeldurchführungsöffnung 2 verlaufenden Deckelsteg 3 und dem innenseitigen Rand der Abdeckklappe 4 ist ein Handgriff 10 angeordnet, wobei der Handgriff 10 im Bereich eines ersten Endes 11 des Handgriffs 10, jedoch von dem ersten Ende 11 des Handgriffs 10 beabstandet, eine orthogonal zum benachbarten Deckelsteg 3 verlaufende und den Deckelsteg 3 sowie den Handgriff 10 durchgreifende Griffschwenkachse 12 aufweist. Die Oberseite 13 des Handgriffs 10 schließt in der Ruhestellung (Figuren 1 bis 3 und 5) mit der oberen Kante 7 des Deckelsteges 3 sowie der Oberseite 6 der Abdeckklappe 4 im Wesentlichen ab. Allerdings weist der Handgriff 10 im Bereich zwischen der Griffschwenkachse 12 und dem ersten Ende 11 des Handgriffs 10 einen über die Abdeckklappe 4 und den Deckelsteg 3 herausragenden Betätigungsvorsprung 14 auf. Alternativ oder zusätzlich, jedoch nicht in den Figuren dargestellt, können der Deckelsteg 3 und/oder die Abdeckklappe 4 neben dem Bereich zwischen der Griffschwenkachse 12 und dem ersten Ende 11 des Handgriffs 10 eine nach oben offene Betätigungsausnehmung aufweisen.
Einer vergleichend Betrachtung der Figuren 1 bis 5 entnimmt man, dass sich der Deckelboden 17 zumindest teilweise in die Kabeldurchführungsöffnung 2 hinein erstreckt, und zwar so weit, dass er die Klappenstege 8 in der Geschlossenstellung (Figuren 1 bis 4) sowie den Handgriff 10 in der Ruhestellung (Figuren 1, 3 und 5) stützt. In diesem Zusammenhang ist es weiterhin vorteilhaft, wenn sich der Deckelboden 17 bis unter den Handgriff 10 über dessen gesamte Länge erstreckt, wobei der Handgriff 10 an seiner unteren Seite des ersten Endes 11 eine Abschrägung 18 aufweist, welche den Drehwinkel des Handgriffs 10 aus einer Ruhestellung in die Betätigungsstellung begrenzt. Dadurch wird die Hubkraft in den Deckelboden 17 eingeleitet und ein Überdrehen des Handgriffs 10 ist verhindert. Der Drehwinkel des Handgriffs 10 aus der Ruhestellung in die Betätigungsstellung kann durch entsprechende Ausbildung der Länge des ersten Endes 11 des Handgriffs 10 (gemessen ab der Griffschwenkachse) in Verbindung mit dessen Höhe und der Ausbildung der Abschrägung 18 eingerichtet sein.

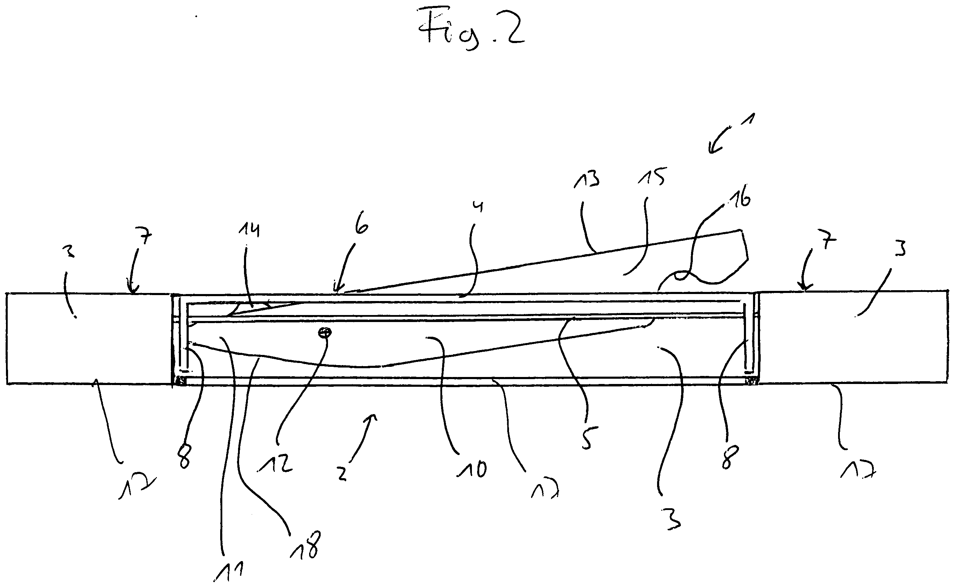

Insbesondere den Figuren 1 und 2 ist entnehmbar, dass der Handgriff 10 im Bereich eines zweiten Endes 15 eine nach unten offene Betätigungsausnehmung 16 aufweist, in welche ein Finger eingreifen kann.

Insbesondere der Figur 1 ist entnehmbar, dass bei nach innen verschobenem und in der Geschlossenstellung befindlicher Abdeckklappe 3 die Oberseite des Handgriffs 10, ggf. mit Ausnahme des Betätigungsvorsprungs 14, die Abdeckklappe 3 und der Deckelsteg 3, ggf. mit Ausnahme der Betätigungsausnehmung, eine ebene und im wesentlichen geschlossene Fläche bilden. Diese ist lediglich durch in den Figuren der Übersichtlichkeit halber übertrieben dargestellte Spalte unterbrochen, welche die Bewegung der verschiedenen Bauteile zueinander erlauben.

Den Figuren 3 bis 5 kann entnommen werden, dass die Griffschwenkachse 12 durch ein Achsenelement, im Beispiel eine Schraube, gebildet ist, welche den Deckelsteg 3 frei drehbar durchgreift und in dem Handgriff 10 drehfest gelagert ist.

## Patentansprüche

1. Anschlussbodendose mit einem Dosenkörper, welcher eine oberseitige Dosenkörperöffnung aufweist, und mit einem die Dosenkörperöffnung verschließenden Dosendeckel (1),
wobei der Dosendeckel (1) eine zu einem Rand des Dosendeckels (1) offene Kabeldurchführungsöffnung (2) aufweist,
wobei der Dosendeckel (1) einen nach oben weisenden und um die Ränder des Dosendeckels (1) sowie der Kabeldurchführungsöffnung (2) umlaufenden Deckelsteg (3) aufweist,
wobei in dem Bereich der Kabeldurchführungsöffnung (2) eine Abdeckklappe (4) eingerichtet ist, welche zwischen einer Geschlossenstellung und einer Offenstellung um eine innenseitig der Kabeldurchführungsöffnung liegende, parallel zur Außenkante des Dosendeckels (1) verlaufende und in seitlichen Teilbereichen des Deckelsteges (3), bezogen auf die Kabeldurchführungsöffnung (2), gelagerte Schwenkachse (5) verschwenkbar ist,
wobei die Oberseite (6) der Abdeckklappe (4) mit einer oberen Kante (7) des Deckelsteges (3) abschließt,
wobei die Abdeckklappe (4) zumindest an den Seiten, nicht jedoch an der äußeren Kante, einen nach unten weisenden Klappensteg (8) aufweist,
wobei die Abdeckklappe (4) auf der Schwenkachse (5) zusätzlich nach außen verschieblich gelagert ist, und
wobei die äußeren Enden des Klappenstegs (8) jeweils eine Rastausnehmung (9) aufweisen, welche auf einem Deckelrahmen des Dosenkörpers bei geöffneter und nach außen verschobener Abdeckklappe (4) aufrasten,
**dadurch gekennzeichnet,**
**dass** zwischen dem innenseitig der Kabeldurchführungsöffnung (2) verlaufenden Deckelsteg (3) und dem innenseitigen Rand der Abdeckklappe (4) ein Handgriff (10) angeordnet ist,
wobei der Handgriff (10) im Bereich eines ersten Endes (11) des Handgriffs (10), jedoch von dem ersten Ende (11) des Handgriffs (10) beabstandet, eine orthogonal zum benachbarten Deckelsteg (3) verlaufende und den Deckelsteg (3) sowie den Handgriff (10) durchgreifende Griffschwenkachse (12) aufweist,
wobei die Oberseite (13) des Handgriffs (10) mit der oberen Kante (7) des Deckelsteges (3) sowie der Oberseite (6) der Abdeckklappe (4) im Wesentlichen abschließt,
wobei der Handgriff (10) im Bereich zwischen der Griffschwenkachse (12) und dem ersten Ende (11) des Handgriffs (10) einen über die Abdeckklappe (4) und den Deckelsteg (3) herausragenden Betätigungsvorsprung (14) aufweist, und/oder der Deckelsteg (3) und/oder die Abdeckklappe (4) neben dem Bereich zwischen der Griffschwenkachse (12) und dem ersten Ende (11) des Handgriffs (10) eine nach oben offene Betätigungsausnehmung aufweist.

2. Anschlussbodendose nach Anspruch 1, **dadurch gekennzeichnet, dass** der Dosendeckel (1) in Aufsicht eine im Wesentlichen quadratische oder rechteckige Form aufweist.

3. Anschlussbodendose nach Anspruch 1 oder 2, **dadurch gekennzeichnet, dass** der Dosenkörper im Wesentlichen kastenförmig ist.

4. Anschlussbodendose nach einem der Ansprüche 1 bis 3,
**dadurch gekennzeichnet, dass** der Handgriff (10) im Bereich eines zweiten Endes (15) eine nach unten offene Betätigungsausnehmung (16) aufweist.

5. Anschlussbodendose nach einem der Ansprüche 1 bis 4,
**dadurch gekennzeichnet, dass** bei nach innen verschobenem und in der Geschlossenstellung befindlicher Abdeckklappe (3) die Oberseite des Handgriffs (10), ggf. mit Ausnahme des Betätigungsvorsprungs (14), die Abdeckklappe (3) und der Deckelsteg (3), ggf. mit Ausnahme der Betätigungsausnehmung, eine ebene und im wesentlichen geschlossene Fläche bilden.

6. Anschlussbodendose nach einem der Ansprüche 1 bis 5,
**dadurch gekennzeichnet, dass** die Griffschwenkachse (12) durch ein Achsenelement, vorzugsweise eine Schraube, gebildet ist, welche den Deckelsteg (3) frei drehbar durchgreift und in dem Handgriff (10) drehfest gelagert ist.

7. Anschlussbodendose nach einem der Ansprüche 1 bis 6,
**dadurch gekennzeichnet, dass** die Oberkante des Deckelrahmens mit der Oberkante (7) des Deckelstegs (3) abschließt.

8. Anschlussbodendose nach einem der Ansprüche 1 bis 7,
**dadurch gekennzeichnet, dass** der Deckelrahmen und der Dosenkörper als voneinander trennbare Bauelemente ausgebildet sind.

9. Anschlussbodendose nach einem der Ansprüche 1 bis 8,
**dadurch gekennzeichnet, dass** der Deckelrahmen in eine Deckelrahmenausnehmung des Dosenkörpers einsetzbar ist.

10. Dosendeckel gemäß einem der Ansprüche 1 bis 9 für eine Anschlussbodendose.

## Claims

1. A floor connection box comprising a box body having an upper box body opening, and a box lid (1) closing the box body opening,
the box lid (1) including a cable passage opening (2) being open up to a border of the box lid (1), the box lid (1) including a lid web (3) facing upward and being disposed around the borders of the box lid (1) as well as of the cable passage opening (2),
in the region of the cable passage opening (2) a cover flap (4) being provided, which is pivotable between a closed position and an open position about a pivot axis (5) disposed at the inner side of the cable passage opening, extending in parallel to the outer edge of the box lid (1) and supported in lateral partial regions of the lid web (3), referred to the cable passage opening (2),
the upper side (6) of the cover flap (4) terminating with an upper edge (7) of the lid web (3),
the cover flap (4) including, at least at the sides, not however at the outer edge, a downward-facing flap web (8),
the cover flap (4) being supported outwardly displaceably on the pivot axis (5), and
the outer ends of the flap web (8) each including a catch recess (9), which snaps on a lid frame of the box body with opened and outwardly displaced cover flap (4),
**characterized by**
that between the lid web (3) extending at the inner side of the cable passage opening (2) and the inner border of the cover flap (4), a handle (10) is disposed,
the handle (10) including in the region of a first end (11) of the handle (10), however spaced from the first end (11) of the handle (10), a gripping pivot axis (12) extending orthogonally to the adjacent lid web (3) and penetrating the lid web (3) as well as the handle (10),
the upper side (13) of the handle (10) substantially terminating with the upper edge (7) of the lid web (3) as well as the upper side (6) of the cover flap (4),
the handle (10) including, in the region between the gripping pivot axis (12) and the first end (11) of the handle (10), an actuation projection (14) projecting beyond the cover flap (4) and the lid web (3), and/or the lid web (3) and/or the cover flap (4) including, beside the region between the gripping pivot axis (12) and the first end (11) of the handle (10), an upwardly open actuation recess.

2. The floor connection box according to claim 1, **characterized by** that the box lid (1) in a top view has a substantially square or rectangular shape.

3. The floor connection box according to claim 1 or 2, **characterized by** that the box body is substantially box-shaped.

4. The floor connection box according to one of claims 1 to 3, **characterized by** that the handle (10) includes, in the region of a second end (15), a downwardly open actuation recess (16).

5. The floor connection box according to one of claims 1 to 4, **characterized by** that with the cover flap (3) being inwardly displaced and in the closed position, the upper side of the handle (10), if applicable with the exception of the actuation projection (14), the cover flap (3) and the lid web (3), if applicable with the exception of the actuation recess, form a plane and substantially closed surface.

6. The floor connection box according to one of claims 1 to 5, **characterized by** that the gripping pivot axis (12) is formed by a shaft member, preferably a screw, which freely rotatably penetrates the lid web (3) and is non-rotatably supported in the handle (10).

7. The floor connection box according to one of claims 1 to 6, **characterized by** that the upper edge of the lid frame terminates with the upper edge (7) of the lid web (3).

8. The floor connection box according to one of claims 1 to 7, **characterized by** that the lid frame and the box body are formed as separable components.

9. The floor connection box according to one of claims 1 to 8, **characterized by** that the lid frame is insertable into a lid frame recess of the box body.

10. A box lid according to one of claims 1 to 9 for a floor connection box.

## Revendications

1. Boîte de jonction de sol comprenant un corps de boîte ayant une ouverture supérieure du corps de boîte, et un couvercle de boîte (1) fermant l'ouverture du corps de boîte,
le couvercle de boîte (1) comportant une ouverture de passage de câble (2) étant ouverte jusqu'à un bord du couvercle de boîte (1),
le couvercle de boîte (1) comportant une entretoise de couvercle (3) tournée vers le haut et étant disposée autour des bords du couvercle de boîte (1) aussi bien que de l'ouverture de passage de câble (2),
dans la région de l'ouverture de passage de câble (2) un volet de couverture (4) étant prévu, qui peut s'articuler entre une position fermée et une position ouverte autour d'un axe de pivot (5) disposé au côté intérieur de l'ouverture de passage de câble, s'étendant en parallèle à l'arête externe du couvercle de boîte (1) et disposé dans des régions partielles latérales de l'entretoise de couvercle (3), par rapport à l'ouverture de passage de câble (2),
le côté supérieur (6) du volet de couverture (4) se terminant avec une arête supérieure (7) de l'entretoise de couvercle (3),
le volet de couverture (4) comportant, au moins aux côtés, mais pas à l'arête externe, une entretoise de volet (8) tournée vers le bas,
le volet de couverture (4) étant monté déplaçable vers l'extérieur sur l'axe de pivot (5), et
les extrémités externes de l'entretoise de volet (8) chacune comportant un évidement de crantage (9), qui vient se loger sur un cadre du couvercle du corps de boîte lors d'un volet de couverture (4) ouvert et déplacé vers l'extérieur,
**caractérisée en ce**
**qu'**entre l'entretoise de couvercle (3) s'étendant au côté intérieur de l'ouverture de passage de câble (2) et le bord intérieur du volet de couverture (4), une poignée (10) est disposée,
la poignée (10) comportant dans la région d'une première extrémité (11) de la poignée (10), mais espacé de la première extrémité (11) de la poignée (10), un axe de pivot de préhension (12) s'étendant orthogonalement à l'entretoise de couvercle (3) voisine et pénétrant dans l'entretoise de couvercle (3) aussi bien que dans la poignée (10),
le côté supérieur (13) de la poignée (10) se terminant essentiellement avec l'arête supérieure (7) de l'entretoise de couvercle (3) aussi bien qu'avec le côté supérieur (6) du volet de couverture (4),
la poignée (10) comportant dans la région entre l'axe de pivot de préhension (12) et la première extrémité (11) de la poignée (10) une saillie d'actionnement (14) faisant saillie au-delà du volet de couverture (4) et l'entretoise de couvercle (3), et/ou l'entretoise de couvercle (3) et/ou le volet de couverture (4) comportant, à côté de la région entre l'axe de pivot de préhension (12) et la première extrémité (11) de la poignée (10), un évidement d'actionnement ouvert vers le haut.

2. Boîte de jonction de sol selon la revendication 1, **caractérisée en ce que** le couvercle de boîte (1) a en une vue d'en haut une forme essentiellement carrée ou rectangulaire.

3. Boîte de jonction de sol selon la revendication 1 ou 2, **caractérisée en ce que** le corps de boîte a une forme essentiellement de bloc.

4. Boîte de jonction de sol selon une des revendications 1 à 3, **caractérisée en ce que** la poignée (10) comporte, dans la région d'une deuxième extrémité (15), un évidement d'actionnement (16) ouvert vers le bas.

5. Boîte de jonction de sol selon une des revendications 1 à 4, **caractérisée en ce que**, si le volet de couverture (3) est déplacé vers l'intérieur et est dans la position fermée, le côté supérieur de la poignée (10), le cas échéant à l'exception de la saillie d'actionnement (14), le volet de couverture (3) et l'entretoise de couvercle (3), le cas échéant à l'exception de l'évidement d'actionnement, forment une surface plate et essentiellement fermée.

6. Boîte de jonction de sol selon une des revendications 1 à 5, **caractérisée en ce que** l'axe de pivot de préhension (12) est réalisé par un élément de tige, de préférence une vis, qui pénètre librement rotative l'entretoise de couvercle (3) et est logée non rotative dans la poignée (10).

7. Boîte de jonction de sol selon une des revendications 1 à 6, **caractérisée en ce que** l'arête supérieure du cadre du couvercle se termine avec l'arête supérieure (7) de l'entretoise de couvercle (3).

8. Boîte de jonction de sol selon une des revendications 1 à 7, **caractérisée en ce que** le cadre du couvercle et le corps de boîte sont réalisés comme des composants séparables.

9. Boîte de jonction de sol selon une des revendications 1 à 8, **caractérisée en ce que** le cadre du couvercle est insérable dans un évidement du cadre du couvercle du corps de boîte.

10. Couvercle de boîte selon une des revendications 1 à 9 pour une boîte de jonction de sol.
